# EUROPÄISCHE PATENTSCHRIFT

(11) **EP 1 586 210 B1**
(45) Veröffentlichungstag und Bekanntmachung des Hinweises auf die Patenterteilung: **30.01.2008**
(21) Anmeldenummer: 03815678.2
(22) Anmeldetag: 06.08.2003
(51) Int. Cl.: H04Q 7/32, H04M 3/42

(54) **VERFAHREN ZUM FREISCHALTEN VON LEISTUNGSMERKMALEN IN TELEKOMMUNIKATIONSGERÄTEN MITTELS SERVICENACHRICHTEN**
METHOD FOR RELEASING FEATURES IN A TELECOMMUNICATIONS TERMINAL USING SERVICE MESSAGES
PROCEDE POUR DEBLOQUER DES FONCTIONS DANS DES TERMINAUX DE COMMUNICATION AU MOYEN DE MESSAGES DE SERVICE

(30) Priorität: 23.01.2003 DE 10302637
(43) Veröffentlichungstag der Anmeldung: 19.10.2005
(73) Patentinhaber: Siemens Home and Office Communication Devices GmbH & Co. KG, 81379 München (DE)
(72) Erfinder: BECKERS, Michael, 46499 Hamminkeln (DE); SCHULZE, Norbert, 46395 Bocholt (DE)
(86) Internationale Anmeldenummer: PCT/DE2003/002641
(87) Internationale Veröffentlichungsnummer: WO 2004/071112

(56) Entgegenhaltungen:
- EP-A- 1 213 932
- US-A- 5 297 191
- US-A- 5 603 084
- US-A1- 2002 045 442
- US-B1- 6 301 484

## Beschreibung

Die vorliegende Erfindung betrifft ein Verfahren zum Freischalten von Leistungsmerkmalen in Telekommunikationsendgeräten gemäß dem Oberbegriff des Patentanspruches 1.

Um sich bei einem Telekommunikationsgerät, das zum Beispiel als Schnurlostelefon, Mobilfunktelefon, telekommunikationsfähiger Personal Digital Assistant (PDA), telekommunikationsfähiges Notebook etc. ausgebildet sein kann, Leistungsmerkmale in dem Gerät frei schalten zu lassen, ist es bekannt, die Leistungsmerkmale für das Telekommunikationsgerät entweder beim Kauf unmittelbar beim Verkäufer frei schalten zu lassen oder das gekaufte Gerät mit nach Hause zunehmen und dann die Freischaltung der Leistungsmerkmale zeitversetzt vorzunehmen, indem ein Service-Techniker bestellt wird, das gekaufte Gerät an eine Servicestelle des Geräteherstellers geschickt bzw. versandt wird, eine Servicestelle aufgesucht wird, eine Codeinformation zur Freischaltung beantragt und zugesandt wird, etc.

Alle diese Verfahren zum Freischalten von Leistungsmerkmalen in Telekommunikationsendgeräten sind sehr aufwendig, kostenintensiv und für den Benutzer des Telekommunikationsgerätes kompliziert und umständlich.

Aus der US 6,301,484 B1 ist ein Verfahren und eine Anordnung zur Fernaktivierung von Leistungsmerkmalen in Geräten zur drahtlosen Kommunikation mittels des SMS-Dienstes bekannt, bei dem ein Serviceprovider eine SMS-Nachricht an das drahtlose Kommunikationsgerät sendet, mit der er dem drahtlosen Kommunikationsgerät eine Information zur Aktivierung eines Leistungsmerkmals, so genannte "Feature Codes", überträgt. Das drahtlose Kommunikationsgerät empfängt die SMS-Nachricht, extrahiert die Aktivierungsinformation und aktiviert gemäß dieser Information das entsprechende Leistungsmerkmal.

Aus der US 2002/0045442 A1 ist ein Verfahren und ein Telekommunikationsnetzwerk zur Steuerung von externen Geräten bekannt, bei dem ein Benutzer eines Telefons eine SMS-Nachricht generiert und diese an einen Server im Telekommunikationsnetzwerk schickt. Der Server in dem Telekommunikationsnetzwerk quittiert die empfangene SMS-Nachricht mit einer weiteren SMS-Nachricht, in der zur Steuerung eines externen Gerätes eine Steuerungskennung enthalten ist.

Die der Erfindung zugrundeliegende Aufgabe besteht darin, ein Verfahren zum Freischalten von Leistungsmerkmalen in Telekommunikationsendgeräten anzugeben, bei dem das individuelle Freischalten des Gerätes für einen Käufer nach dem Kauf des Gerätes vereinfacht und verbessert wird und aber dabei dennoch sicher ist.

Diese Aufgabe wird ausgehend von dem im Oberbegriff des Anspruchs 1 definierten Verfahren durch die im Kennzeichen des Anspruchs 1 angegebenen Merkmale gelöst.

Außerdem wird diese Aufgabe ausgehend von dem im Oberbegriff des Anspruchs 8 definierten Verfahren durch die im Kennzeichen des Anspruchs 8 angegebenen Merkmale gelöst.

Die der Erfindung zugrundeliegende Idee besteht darin, dass ein Telekommunikationsendgerät, das einen Teleservice - vorzugsweise den "Short Message Service"-Dienst (SMS-Dienst) nach Anspruch 11 und/oder den "Multimedia Message Service"-Dienst (MMS-Dienst) nach Anspruch 12 - unterstützt und entsprechende Servicenachrichten senden und empfangen kann, zum Freischalten eines Leistungsmerkmales mit einem Anbieter und/oder Vermittler von Leistungsmerkmalen, den Leistungsmerkmalprovider mit Hilfe eines Teleserviceproviders kommuniziert und dabei Servicenachrichten austauscht, mit denen einerseits die Freischaltung des Leistungsmerkmals beantragt und andererseits die Freischaltung aktiviert wird.

Da es sich bei dem Telekommunikationsgerät um ein telekommunikationsfähiges Gerät handelt, ist es möglich, eine Telekommunikationsverbindung zu diesem Gerät aufzubauen und eine Freischaltung von bis dahin im Gerät zwar schon vorhandenen aber nicht aktivierten Leistungsmerkmalen über diese Telekommunikationsverbindung vorzunehmen.

Um die Freischaltung des Leistungsmerkmals sicherer, insbesondere als Kopierschutz, und eindeutiger (Individualisierung des freizuschaltenden Leistungsmerkmals) zu machen, ist es von Vorteil, wenn der Austausch der Servicenachrichten gemäß dem Anspruch 1 kennungsgeschützt - z.B. gemäß der Ansprüche 2 bis 4 durch eine mit den Servicenachrichten ebenfalls ausgetauschte Freischaltungskennung, die gemäß Anspruch 4 vorzugsweise eine individuelle Gerätekennung ist, oder gemäß der Ansprüche 5 bis 7 durch eine zuvor generierte Bestellungskennung auf die mit der anfordernden Servicenachricht Bezug genommen wird - oder gemäß dem Anspruch 8 verschlüsselt erfolgt.

Weitere vorteilhafte Weiterbildungen der Erfindung sind in den übrigen Unteransprüchen angegeben.

Ein Ausführungsbeispiel der Erfindung mit zwei Gestaltungsvarianten wird anhand der FIGUREN 1 bis 3 erläutert. Es zeigen:
FIGUR 1 Teleservice-Szenario zur Freischaltung von Leistungsmerkmalen in Telekommunikationsendgeräten,
FIGUR 2 Signalflussdiagramm für ein erstes Teleservice-Szenario,
FIGUR 3 Signalflussdiagramm für ein zweites Teleservice-Szenario.

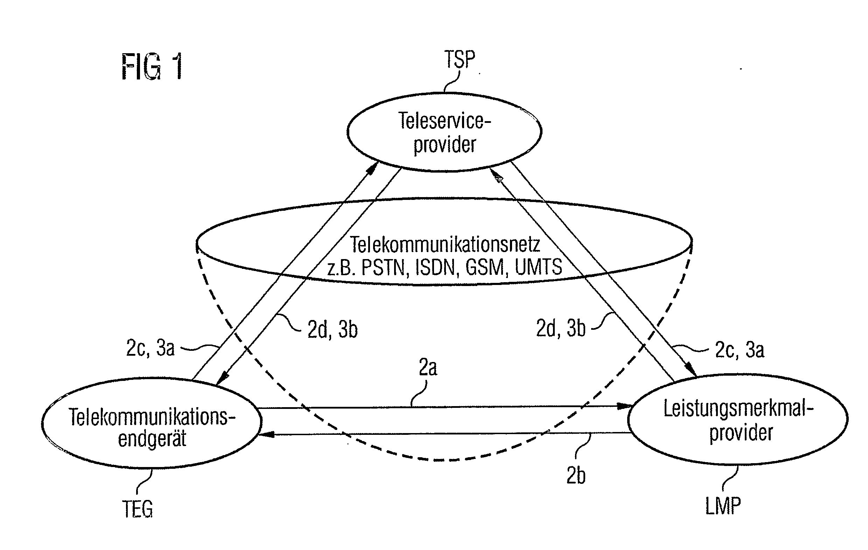

Die FIGUR 1 zeigt ein Teleservice-Szenario zur Freischaltung von Leistungsmerkmalen in Telekommunikationsendgeräten TEG, bei dem das Telekommunikationsendgerät TEG als ein einen Teleservice - z.B. den "Short Message Service"-Dienst (SMS-Dienst) oder den "Multimedia Message Service"-Dienst (MMS-Dienst) - unterstützendes Gerät über ein Telekommunikationsnetz TKN einerseits Verbindungen 2a, 2b - eine erste Verbindung 2a und eine zweite Verbindung 2b - und andererseits Teleservice-Verbindungen 2c, 2d, 3a, 3b - erste Teleserviceverbindungen 2c, 3a und zweite Teleserviceverbindungen 2d, 3b - zu einem Leistungsmerkmalprovider LMP hat. Während die Verbindungen 2a, 2b zu dem Leistungsmerkmalprovider LMP unmittelbar hergestellt werden, führen die Teleservice-Verbindungen 2c, 2d, 3a, 3b über einen Teleserviceproviders TSP zu dem Leistungsmerkmalprovider LMP.

Das Telekommunikationsendgerät TEG ist vorzugsweise als ein Schnurlos-Telefon mit einer Schnurlos-Basisstation und mindestens einem Schnurlos-Handapparat oder als Mobilfunk-Handapparat ausgebildet.

In Abhängigkeit davon, ob das Telekommunikationsendgerät TEG ein Schnurlos-Telefon oder ein Mobilfunk-Telefon ist, ist das Telekommunikationsnetz TKN entweder vorzugsweise ein PSTN-Netz (Public Switch Telephone Network) oder ein ISDN-Netz (Integrated Services Digital Network) oder vorzugsweise ein GSM-Netz (Groupe Speciale Mobile; Global System for Mobile Communication) oder ein UMTS-Netz (Universal Mobile Telecommunication System).

Während die Teleserviceverbindungen 2c, 2d, 3a, 3b für das Freischalten der Leistungsmerkmale in dem Telekommunikationsendgerät TEG zwingend über das Telekommunikationsnetz TKN aufzubauen sind, müssen die Verbindungen 2a, 2b nicht notwendigerweise über das Telekommunikationsnetz TKN gehen. So können diese Verbindungen zwischen dem Telekommunikationsendgerät TEG und dem Leistungsmerkmalprovider LMP auch über den Postweg, das Internet oder durch persönlichen Kontakt bei dem die Informationen, die über diese Verbindungen gehen, schriftlich und/oder mündlich übertragen werden. Um diesen Umstand in FIGUR 1 zum Ausdruck zu bringen, ist das Telekommunikationsnetz TKN dort, wo die Verbindungen 2a, 2b das Telekommunikationsnetz TKN durchlaufen, gestrichelt gezeichnet.

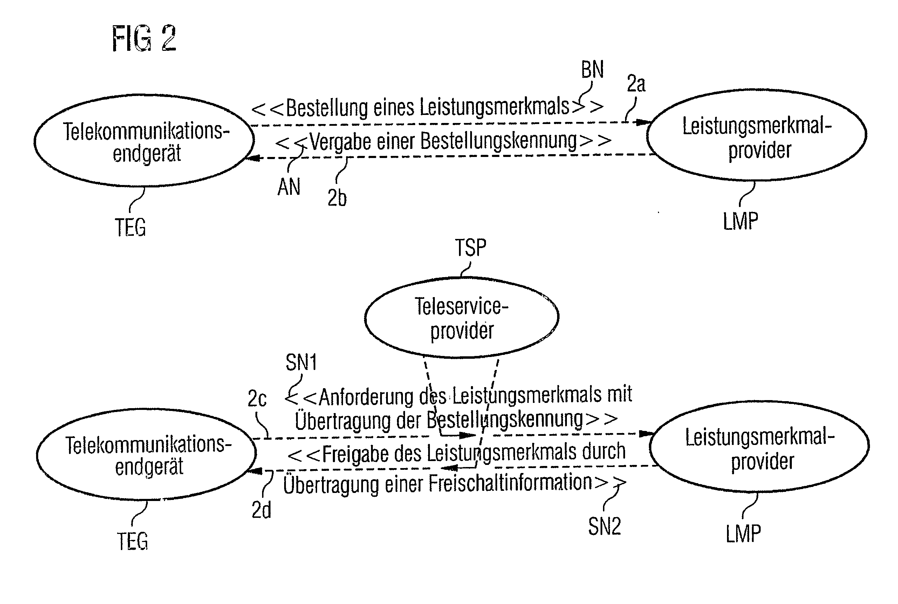

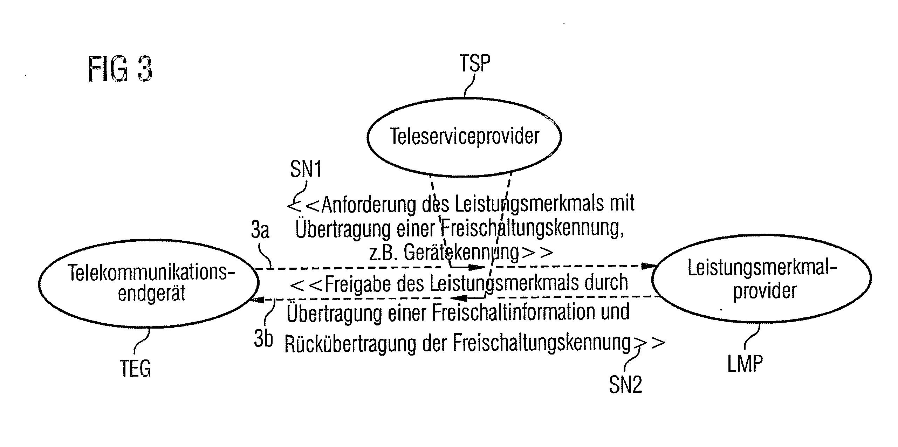

Welche Informationen bzw. Nachrichten auf den Verbindungen 2a, 2b und den Teleserviceverbindungen 2c, 2d, 3a, 3b letztendlich übertragen werden, wird im folgenden im Fall der Verbindungen 2a, 2b und der Teleserviceverbindungen 2c, 2d anhand der FIGUR 2 und im Fall der Teleserviceverbindungen 3a, 3b anhand der FIGUR 3 erläutert.

FIGUR 2 zeigt ein Signalflussdiagramm für ein erstes Teleservice-Szenario zur Freischaltung von Leistungsmerkmalen in dem Telekommunikationsendgerät TEG. Der dargestellte Signalfluss beginnt damit, dass über die erste Verbindung 2a von dem Telekommunikationsendgerät TEG eine Bestellungsnachricht BN zu dem Leistungsmerkmalprovider LMP übertragen wird. Mit dieser Bestellungsnachricht BN bestellt der Benutzer des Telekommunikationsendgerätes TEG bei dem Leistungsmerkmalprovider LMP ein Leistungsmerkmal, das auf seinem Telekommunikationsendgerät TEG freigeschaltet werden soll. Infolge dieser Bestellung durch das Telekommunikatiorisendgerät TEG schickt der Leistungsmerkmalprovider LMP über die zweite Verbindung 2b - unmittelbar danach oder, falls die Leistungsmerkmalfreischaltung kostenpflichtig ist, nach entsprechendem Zahlungseingang -eine Auslieferungsnachricht AN an das Telekommunikationsendgerät TEG, mit der der Leistungsmerkmalprovider LMP aufgrund der empfangenen Bestellungsnachricht BN eine von dem Leistungsmerkmalprovider LMP vergebene bzw. erzeugte Bestellungskennung an den Benutzer des Telekommunikationsendgerätes TEG übermittelt.

Von dem Leistungsmerkmalprovider LMP wird die Bestellungskennung deshalb ausgeliefert, weil mit dieser Bestellungskennung die Freischaltung des Leistungsmerkmals sicherer und eineindeutiger gemacht werden kann. Dies ist aber nicht unbedingt erforderlich, so ist es beispielsweise auch möglich, dass das Leistungsmerkmal, wie nachstehend beschrieben, unmittelbar - ohne Übertragung einer Kennung - von dem Benutzer des Telekommunikationsendgerätes TEG angefordert wird.

Um aber dennoch den Sicherheits- und Eindeutigkeitsaspekt nicht ganz unter den Tisch fallen zu lassen, kann statt der kennungsgeschützten Übertragung eine verschlüsselte Übertragung erfolgen, bei der die an der Übertragung beteiligten Parteien einen Schlüssel vereinbaren, mit dem alle Nachrichten im Zusammenhang mit der Freischaltung des Leistungsmerkmales verschlüsselt werden.

Die Verbindungen 2a, 2b führen wie in FIGUR 1 dargestellt vorzugsweise über das Telekommunikationsnetz TKN. Es ist aber - wie bei der Beschreibung der FIGUR 1 bereits erläutert - auch möglich, das Leistungsmerkmal statt der fernmündlichen Bestellung mündlich, schriftlich oder über das Internet beim Leistungsmerkmalprovider LMP zu bestellen.

Nachdem die Bestellungskennung von dem Telekommunikationsendgerät TEG empfangen worden ist, übertragt das Telekommunikationsendgerät TEG über die erste Teleserviceverbindung 2c eine erste Servicenachricht SN1 über den Teleserviceprovider TSP an den Leistungsmerkmalprovider LMP, mit der der Benutzer des Telekommunikationsendgerätes das bestellte Leistungsmerkmal bei dem Leistungsmerkmalprovider LMP anfordert. Um den Bezug zu der Bestellung herzustellen wird die Bestellungskennung mit der Servicenachricht SN1 übertragen. Aus Kopierschutzgründen merkt sich das Telekommunikationsendgerät TEG, dass eine und welche Leistungsmerkmalanforderung läuft und von welchem Absender (Leistungsmerkmalprovider LMP) die Freischaltung erwartet wird.

Sobald der Leistungsmerkmalprovider LMP die erste Servicenachricht SN1 mit der Bestellungskennung empfangen hat, überprüft dieser, ob für die übertragene Bestellungskennung eine Leistungsmerkmalbestellung vorliegt.

Ist das nicht der Fall, so kann der Leistungsmerkmalprovider LMP sich folgendermaßen verhalten:
(i) Er kann den Benutzer des Telekommunikationsendgerätes TEG informieren, dass das angeforderte Leistungsmerkmal nicht freigeschaltet werden kann, weil es zu der übermittelten Bestellungskennung keine dazugehörige Bestellung gibt.
(ii) Er reagiert überhaupt nicht auf die Servicenachricht SN1 und überlässt es dem Benutzer einen erneuten Versuch zu starten.

Liegt jedoch für die übertragene Bestellungskennung eine Leistungsmerkmalbestellung vor, so löscht er die bei der Bestellung erzeugte und vergebene Bestellungskennung und überträgt über die zweite Teleserviceverbindung 2d.eine zweite Servicenachricht SN2 über den Teleserviceprovider TSP an das Telekommunikationsendgerät TEG, mit der er dem Telekommunikationsendgerät TEG eine Freischaltinformation zum Freischalten des Leistungsmerkmals überträgt.

Sobald das Telekommunikationsendgerät TEG die zweite Servicenachricht SN2 mit der Freischaltinformation empfangen hat, überprüft es, ob der Absender der zweiten Servicenachricht SN2 mit dem gemerkten Absender übereinstimmt. Ist das der Fall, setzt das Telekommunikationsendgerät TEG die Freischaltinformation um und schaltet das angeforderte Leistungsmerkmal frei. Anderenfalls lässt es die Servicenachricht SN2 unberücksichtigt und wartet auf eine zweite Servicenachricht, die vom richtigen Absender ist.

FIGUR 3 zeigt ein Signalflussdiagramm für ein zweites Teleservice-Szenario zur Freischaltung von Leistungsmerkmalen in dem Telekommunikationsendgerät TEG. Der dargestellte Signalfluss beginnt damit, dass, nachdem der Benutzer des Telekommunikationsendgerätes TEG - z.B. über einen Menüpunkt "Leistungsmerkmale beim Leistungsmerkmalprovider kostenpflichtig beantragen" des menügesteuerten Gerätes das gewünschte Leistungsmerkmal gefunden hat - das Telekommunikationsendgerät TEG über die weitere erste Teleserviceverbindung 3a eine weitere erste Servicenachricht SN1 über den Teleserviceprovider TSP an den Leistungsmerkmalprovider LMP überträgt, mit der der Benutzer des Telekommunikationsendgerätes das über den Menüpunkt "Leistungsmerkmale beim Leistungsmerkmalprovider kostenpflichtig beantragen" ausgewählte Leistungsmerkmal bei dem Leistungsmerkmalprovider LMP anfordert.

Um die Freischaltung des Leistungsmerkmals sicherer und eineindeutiger zu machen, wird von dem Telekommunikationsendgerät TEG eine Freischaltungskennung mit der ersten Servicenachricht SN1 übertragen. Dies Freischaltungskennung ist vorzugsweise eine individuelle Gerätekennung - z.B. im Fall eines Schnurlos-Telefons die RFPI-Kennung (Radio Fixed Part Identification).

Das Übertragen der Freischaltungskennung ist aber nicht unbedingt erforderlich, so ist es beispielsweise auch möglich, dass das Leistungsmerkmal, wie nachstehend beschrieben, unmittelbar - ohne Übertragung einer Kennung - von dem Benutzer des Telekommunikationsendgerätes TEG angefordert wird.

Um aber dennoch den Sicherheits- und Eindeutigkeitsaspekt nicht ganz unter den Tisch fallen zu lassen, kann statt der kennungsgeschützten Übertragung eine verschlüsselte Übertragung erfolgen, bei der die an der Übertragung beteiligten Parteien einen Schlüssel vereinbaren, mit dem alle Nachrichten im Zusammenhang mit der Freischaltung des Leistungsmerkmales verschlüsselt werden.

Sobald der Leistungsmerkmalprovider LMP die erste Servicenachricht SN1 mit der Freischaltungskennung empfangen hat, überträgt dieser über die weitere zweite Teleserviceverbindung 3b eine weitere zweite Servicenachricht SN2 über den Teleserviceprovider TSP an das Telekommunikationsendgerät TEG, mit der er dem Telekommunikationsendgerät TEG eine Freischaltinformation zum Freischalten des Leistungsmerkmals überträgt und außerdem die Freischaltungskennung zurück überträgt.

Sobald das Telekommunikationsendgerät TEG die zweite Servicenachricht SN2 mit der Freischaltinformation empfangen hat, überprüft es, ob die zurück übertragene Freischaltungskennung mit der in der ersten Servicenachricht SN1 gesendeten Freischaltungskennung übereinstimmt. Ist das der Fall, setzt das Telekommunikationsendgerät TEG die Freischaltinformation um und schaltet das angeforderte Leistungsmerkmal frei. Anderenfalls lässt es die Servicenachricht SN2 unberücksichtigt und wartet auf eine zweite Servicenachricht mit der richtigen Freischaltungskennung.

Um die Freischaltung des Leistungsmerkmals zu bestätigen, ist es vorteilhaft, wenn das Telekommunikationsendgerät TEG die Freischaltungskennung erneut an den Leistungsmerkmalprovider LMP sendet.

## Patentansprüche

1. Verfahren zum Freischalten von Leistungsmerkmalen in Telekommunikationsendgeräten, bei dem
a) das Telekommunikationsendgerät (TEG) einen Teleservice unterstützt und entsprechende Servicenachrichten (SN1, SN2) senden und empfangen kann,
**dadurch gekennzeichnet, dass**
b) das Telekommunikationsendgerät (TEG) eine erste Servicenachricht (SN1) über einen Teleserviceprovider (TSP) an einen Leistungsmerkmalprovider (LMP) sendet, mit der es die Freischaltung eines Leistungsmerkmals beim Leistungsmerkmalprovider (LMP) beantragt,
c) der Leistungsmerkmalprovider (LMP) eine zweite Servicenachricht (SN2) über den Teleserviceprovider (TSP) an das Telekommunikationsgerät (TEG) sendet, mit der er dem Telekommunikationsendgerät (TEG) eine Freischaltinformation zum Freischalten des Leistungsmerkmals überträgt,
d) das Telekommunikationsendgerät (TEG) mit der ersten Servicenachricht (SN1) eine Kennung zum Schutz und zur Individualisierung der Leistungsmerkmalsfreischaltung sendet, die der Leistungsmerkmalprovider (LMP) mit der zweiten Servicenachricht (SN2) an das Telekommunikationsendgerät (TEG) zurücksendet und
e) das Telekommunikationsendgerät (TEG) die zweite Servicenachricht (SN2) empfängt, die Freischaltinformation umsetzt und mit dem Umsetzen dieser Information das Leistungsmerkmal frei schaltet, wenn die mit der zweiten Servicenachricht (SN2) empfangene Kennung mit der gesendeten Kennung übereinstimmt.

2. Verfahren nach Anspruch 1, **dadurch gekennzeichnet, dass**
eine telekommunikationsendgerätspezifische Freischaltungskennung als die Kennung zum Schutz und zur Individualisierung der Leistungsmerkmalsfreischaltung benutzt wird.

3. Verfahren nach Anspruch 2, **dadurch gekennzeichnet, dass**
das Telekommunikationsendgerät (TEG) die Freischaltungskennung zur Bestätigung der Leistungsmerkmalsfreischaltung erneut an den Leistungsmerkmalprovider (LMP) sendet.

4. Verfahren nach Anspruch 2 oder 3, **dadurch** gekenn- zeichnet, dass
eine individuelle Gerätekennung als die Freischaltungskennung benutzt wird.

5. Verfahren nach Anspruch 1, **dadurch gekennzeichnet, dass**
eine einmalige eineindeutige Bestellungskennung als die Kennung zum Schutz und zur Individualisierung der Leistungsmerkmalsfreischaltung benutzt wird, wobei das Telekommunikationsendgerät (TEG) beim Leistungsmerkmalprovider (LMP) das freizuschaltende Leistungsmerkmal bestellt und von dem Leistungsmerkmalprovider (LMP) die Bestellungskennung erhält.

6. Verfahren nach Anspruch 5, **dadurch gekennzeichnet, dass**
a) das Telekommunikationsendgerät (TEG) mit der ersten Servicenachricht (SN1) die Bestellungskennung sendet und sich zum Schutz der Leistungsmerkmalfreischaltung das freizuschaltende Leistungsmerkmal und den Leistungsmerkmalprovider (LMP), von dem das Leistungsmerkmal angefordert worden ist und von dem die Freischaltinformation erwartet wird, merkt,
b) der Leistungsmerkmalprovider (LMP) überprüft, ob die mit der ersten Servicenachricht (SN1) empfangene Kennung mit der Bestellungskennung übereinstimmt, und bei positiver Überprüfung die Bestellungskennung löscht und die zweite Servicenachricht (SN2) an das Telekommunikationsendgerät (TEG) sendet und
c) das Telekommunikationsendgerät (TEG) die Freischaltinformation umsetzt und damit das Leistungsmerkmal frei schaltet, wenn mit der empfangenen Freischaltinformation das gemerkte freizuschaltende Leistungsmerkmal frei geschaltet wird und der Leistungsmerkmalprovider (LMP), der die Freischaltinformation gesendet hat, der gemerkte Leistungsmerkmalprovider (LMP) ist.

7. Verfahren nach Anspruch 5, **dadurch gekennzeichnet, dass**
die Bestellung des Leistungsmerkmals schriftlich, mündlich, fernmündlich, via Internet oder mittels einer Bestellnachricht erfolgt und das Erhalten des Leistungsmerkmals schriftlich, mündlich, fernmündlich, via Internet oder mittels einer Bestätigungsnachricht erfolgt.

8. Verfahren zum Freischalten von Leistungsmerkmalen in Telekommunikationsendgeräten, bei dem
a) das Telekommunikationsendgerät (TEG) einen Teleservice unterstützt und entsprechende Servicenachrichten (SN1, SN2) senden und empfangen kann,
**dadurch gekennzeichnet, dass**
b) das Telekommunikationsendgerät (TEG) eine erste Servicenachricht (SN1) über einen Teleserviceprovider (TSP) an einen Leistungsmerkmalprovider (LMP) sendet, mit der es die Freischaltung eines Leistungsmerkmals beim Leistungsmerkmalprovider (LMP) beantragt,
c) der Leistungsmerkmalprovider (LMP) eine zweite Servicenachricht (SN2) über den Teleserviceprovider (TSP) an das Telekommunikationsgerät (TEG) sendet, mit der er dem Telekommunikationsendgerät (TEG) eine Freischaltinformation zum Freischalten des Leistungsmerkmals überträgt,
d) zum Schutz und zur Individualisierung der Leistungsmerkmalsfreischaltung die erste und zweite Servicenachricht (SN1, SN2) verschlüsselt gesendet wird und das Telekommunikationsendgerät (TEG) und der Leistungsmerkmalprovider (LMP) den für diese Verschlüsselung verwendeten Schlüssel vereinbaren und
e) das Telekommunikationsendgerät (TEG) die zweite Servicenachricht (SN2) empfängt, die Freischaltinformation umsetzt und mit dem Umsetzen dieser Information das Leistungsmerkmal frei schaltet.

9. Verfahren nach einem der Ansprüche 1 bis 8, **dadurch gekennzeichnet, dass**
ein Schnurlos-Telefon mit einer Schnurlos-Basisstation und mindestens einem Schnurlos-Handapparat als das Telekommunikationsendgerät und die "Radio Fixed Part Identification" als individuelle Gerätekennung benutzt wird.

10. Verfahren nach einem der Ansprüche 1 bis 8, **dadurch gekennzeichnet, dass**
ein Mobilfunk-Handapparat als das Telekommunikationsendgerät benutzt wird.

11. Verfahren nach einem der Ansprüche 1 bis 10, **dadurch gekennzeichnet, dass**
als Teleservice der "Short Message Service"-Dienst (SMS-Dienst) benutzt wird und demzufolge die Servicenachrichten "Short Message Service"-Nachrichten (SMS-Nachrichten) sind.

12. Verfahren nach einem der Ansprüche 1 bis 10, **dadurch gekennzeichnet, dass**
als Teleservice der "Multimedia Message Service"-Dienst (MMS-Dienst) benutzt wird und demzufolge die Servicenachrichten "Multimedia Message Service"-Nachrichten (MMS-Nachrichten) sind.

## Claims

1. Method for enabling features in telecommunications terminals, wherein
a) the telecommunications terminal (TEG) supports a teleservice and can send and receive corresponding service messages (SN1, SN2),
**characterised in that**
b) the telecommunications terminal (TEG) sends a first service message (SN1) via a teleservice provider (TSP) to a feature provider (LMP), with which message it requests enabling of a feature from the feature provider (LMP),
c) the feature provider (LMP) sends a second service message (SN2) via the teleservice provider (TSP) to the telecommunications terminal (TEG), with which message it transmits enabling information for enabling the feature to the telecommunications terminal (TEG),
d) the telecommunications terminal (TEG) sends, with the first service message (SN1), an ID code for protection and personalisation of feature enabling, which code is transmitted back to the telecommunications terminal (TEG) by the feature provider (IMP) with the second service message (SN2) and
e) the telecommunications terminal (TEG) receives the second service message (SN2), implements the enabling information and, by implementing said information, enables the feature if the code received with the second service message (SN2) corresponds to the code transmitted.

2. Method according to claim 1,
**characterised in that** an enabling code specific to the telecommunications terminal is used as the ID code for protecting and personalising feature enabling.

3. Method according to claim 2,
**characterised in that** the telecommunications terminal (TEG) re-transmits the enabling code to the feature provider (LMP) to confirm feature enabling.

4. Method according to claim 2 or 3,
**characterised in that** an individual device ID is used as the enabling code.

5. Method according to claim 1,
**characterised in that** a one-off, unique order ID is used as the code for the protection and personalisation of feature enabling, the telecommunications terminal (TEG) ordering the feature to be enabled from the feature provider (LMP) and receiving the order ID from the feature provider (LMP).

6. Method according to claim 5,
**characterised in that**
a) the telecommunications terminal (TEG) sends with a first service message (SN1) the order ID and, to protect feature enabling, remembers the feature to be enabled and the feature provider (LMP) from which the feature has been requested and from which the enabling information is awaited,
b) the feature provider (LMP) checks whether the ID code received with a first service message (SN1) coincides with the order ID, and, if so, deletes the order ID and sends the second service message (SN2) to the telecommunications terminal (TEG) and
c) the telecommunications terminal (TEG) implements the enabling information, thereby enabling the feature if the remembered feature to be enabled is enabled with the received enabling information and if the feature provider (LMP) which has sent the enabling information is the remembered feature provider (LMP).

7. Method according to claim 5,
**characterised in that** the feature is ordered in writing, orally, by telephone, over the Internet or by means of an order message and the feature is received in writing, orally, by telephone, over the Internet or by means of a confirmation message.

8. Method for enabling features in telecommunications terminals, wherein
a) the telecommunications terminal (TEG) supports a teleservice and can transmit and receive corresponding service messages (SN1, SN2),
**characterised in that**
b) the telecommunications terminal (TEG) sends a first service message (SN1) via a teleservice provider (TSP) to a feature provider (IMP), with which message it requests enabling of a feature from the feature provider (LMP),
c) the feature provider (LMP) sends a second service message (SN2) via the teleservice provider (TSP) to the telecommunications terminal (TEG), with which message it transmits to the telecommunications terminal (TEG) enabling information for enabling the feature,
d) to protect and personalise feature enabling, the first and second service message (SN1, SN2) is sent in encrypted form and the telecommunications terminal (TEG) and the feature provider (LMP) agree the key for said encryption, and
e) the telecommunications terminal (TEG) receives the second service message (SN2), implements the enabling information and, by implementing said information, enables the feature.

9. Method according to one of claims 1 to 8,
**characterised in that** a cordless telephone with a cordless base station and at least one cordless handset is used as the telecommunications terminal and the "Radio Fixed Part Identification" is used as an individual device ID.

10. Method according to one of claims 1 to 8,
**characterised in that** a mobile phone handset is used as the telecommunications terminal.

11. Method according to one of claims 1 to 10,
**characterised in that** the "Short Message Service" (SMS) is used as the teleservice and consequently the service messages are "Short Message Service" (SMS) messages.

12. Method according to one of claims 1 to 10,
**characterised in that** the "Multimedia Message Service" (MMS) is used as the teleservice and consequently the service messages are "Multimedia Message Service" (MMS) messages.

## Revendications

1. Procédé pour débloquer des caractéristiques de services dans des terminaux de télécommunications, dans lequel
a) le terminal de télécommunications (TEG) supporte un service à distance et peut émettre et recevoir des messages de services (SN1, SN2) en conséquence,
**caractérisé en ce que**
b) le terminal de télécommunications (TEG) envoie à un fournisseur de caractéristiques de services (LMP), par l'intermédiaire d'un fournisseur de services à distance (TSP), un premier message de service (SN1) avec lequel il demande le déblocage d'une caractéristique de service au fournisseur de caractéristiques de services (LMP),
c) le fournisseur de caractéristiques de services (LMP) envoie à l'appareil de télécommunications (TEG), par l'intermédiaire du fournisseur de services à distance (TSP), un deuxième message de service (SN2) avec lequel il transmet au terminal de télécommunications (TEG) une information de déblocage pour débloquer la caractéristique de service,
d) le terminal de télécommunications (TEG) envoie, avec le premier message de service (SN1), un identificateur de protection et d'individualisation du déblocage de la caractéristique de service, que le fournisseur de caractéristiques de services (LMP) retourne au terminal de télécommunications (TEG) avec le deuxième message de service (SN2), et
e) le terminal de télécommunications (TEG) reçoit le deuxième message de service (SN2), applique l'information de déblocage et, avec l'application de cette information, débloque la caractéristique de service lorsque l'identificateur reçu avec le deuxième message de service (SN2) coïncide avec l'identificateur émis.

2. Procédé selon la revendication 1, **caractérisé en ce qu'**un identificateur de déblocage spécifique au terminal de télécommunications est utilisé en tant qu'identificateur de protection et d'individualisation du déblocage de caractéristique de service.

3. Procédé selon la revendication 2, **caractérisé en ce que** le terminal de télécommunications (TEG) envoie de nouveau l'identificateur de déblocage au fournisseur de caractéristiques de services (LMP) pour confirmer le déblocage de caractéristique de service.

4. Procédé selon la revendication 2 ou 3, **caractérisé en ce qu'**est utilisé, en tant qu'identificateur de déblocage, un identificateur individuel d'appareil.

5. Procédé selon la revendication 1, **caractérisé en ce qu'**un identificateur de commande unique bi-univoque est utilisé en tant qu'identificateur de protection et d'individualisation du déblocage d'une caractéristique de service, le terminal de télécommunications (TEG) commandant auprès du fournisseur de caractéristiques de services (LMP) la caractéristique de service à débloquer et recevant du fournisseur de caractéristiques de services (LMP) l'identificateur de commande.

6. Procédé selon la revendication 5, **caractérisé en ce que**
a) le terminal de télécommunications (TEG) envoie l'identificateur de commande avec le premier message de service (SN1) et, pour protéger le déblocage de caractéristique de service, prend note de la caractéristique de service à débloquer et du fournisseur de caractéristiques de services (LMP) auquel la caractéristique de service a été demandée et dont l'information de déblocage est attendue,
b) le fournisseur de caractéristiques de services (LMP) vérifie si l'identificateur reçu avec le premier message de service (SN1) coïncide avec l'identificateur de commande et, si la vérification est positive, efface l'identificateur de commande et envoie le deuxième message de service (SN2) au terminal de télécommunications (TEG) et
c) le terminal de télécommunications (TEG) applique l'information de déblocage et débloque ainsi la caractéristique de service lorsque la caractéristique de service à débloquer dont il a été pris note est débloquée avec l'information de déblocage reçue et le fournisseur de caractéristiques de services (LMP) qui a émis l'information de déblocage est le fournisseur de caractéristiques de services (LMP) dont il a été pris note.

7. Procédé selon la revendication 5, **caractérisé en ce que** la commande de la caractéristique de service se fait par écrit, oralement, par téléphone, via Internet ou au moyen d'un message de commande et la réception de la caractéristique de service a lieu par écrit, oralement, par téléphone, via Internet ou au moyen d'un message de confirmation.

8. Procédé pour débloquer des caractéristiques de services dans des terminaux de télécommunications, dans lequel
a) le terminal de télécommunications (TEG) supporte un service à distance et peut émettre et recevoir des messages de services (SN1, SN2) en conséquence,
**caractérisé en ce que**
b) le terminal de télécommunications (TEG) envoie à un fournisseur de caractéristiques de services (LMP), par l'intermédiaire d'un fournisseur de services à distance (TSP), un premier message de service (SN1) avec lequel il demande le déblocage d'une caractéristique de service au fournisseur de caractéristiques de services (LMP),
c) le fournisseur de caractéristiques de services (LMP) envoie à l'appareil de télécommunications (TEG), par l'intermédiaire du fournisseur de services à distance (TSP), un deuxième message de service (SN2) avec lequel il transmet au terminal de télécommunications (TEG) une information de déblocage pour débloquer la caractéristique de service,
d) les premier et deuxième messages de services (SN1, SN2) sont envoyés sous forme cryptée aux fins de protéger et d'individualiser le déblocage de la caractéristique de service, et le terminal de télécommunications (TEG) et le fournisseur de caractéristiques de services (LMP) conviennent de la clé utilisée pour ce cryptage et
e) le terminal de télécommunications (TEG) reçoit le deuxième message de service (SN2), applique l'information de déblocage et, avec l'application de cette information, débloque la caractéristique de service.

9. Procédé selon l'une des revendications 1 à 8,
**caractérisé en ce qu'**on utilise, en tant que terminal de télécommunications, un téléphone sans fil avec une station de base sans fil et au moins un combiné sans fil et, en tant qu'identificateur individuel d'appareil, la «Radio Fixed Part Identification».

10. Procédé selon l'une des revendications 1 à 8,
**caractérisé en ce qu'**on utilise, en tant que terminal de télécommunications, un combiné radio mobile.

11. Procédé selon l'une des revendications 1 à 10,
**caractérisé en ce qu'**on utilise, en tant que service à distance, le service «Short Message Service» (service SMS) et les messages de services sont par conséquent des messages «Short Message Service» (messages SMS).

12. Procédé selon l'une des revendications 1 à 10,
**caractérisé en ce qu'**on utilise, en tant que service à distance, le service «Multimedia Message Service» (service MMS) et les messages de services sont par conséquent des messages «Multimedia Message Service» (messages MMS).
